# EUROPÄISCHE PATENTSCHRIFT

(11) **EP 0 947 485 B1**
(45) Veröffentlichungstag und Bekanntmachung des Hinweises auf die Patenterteilung: **09.10.2002**
(21) Anmeldenummer: 99104441.3
(22) Anmeldetag: 05.03.1999
(51) Int. Cl.: C04B 35/111, C09K 3/14

(54) **Verfahren zur Herstellung eines gesinterten, keramischen Schleifmittels**
Process for the production of a sintered ceramic abrasive
Procédé de préparation d'abrasif céramique fritté

(30) Priorität: 06.03.1998 DE 19809679
(43) Veröffentlichungstag der Anmeldung: 06.10.1999
(73) Patentinhaber: Fraunhofer-Gesellschaft zur Förderung der angewandten Forschung e.V., 80636 München (DE)
(72) Erfinder: Blank, Paul, Dr.rer.nat., 01187 Dresden (DE); Krell, Andreas, Dr. rer. nat. habil., 01217 Dresden (DE)
(74) Vertreter: Heun, Thomas

(56) Entgegenhaltungen:
- DE-A- 19 503 854
- DE-C- 19 520 614

## Beschreibung

Die Erfindung betrifft ein Verfahren zur Herstellung eines polykristallinen, gesinterten, keramischen Schleifmittels aus einem Pulver-Rohstoff, ein derart hergestelltes Schleifmittel, sowie Schleifwerkzeuge mit einem solchen Schleifmittel.

Zur Herstellung von keramischen Schleifmitteln haben zwei Verfahrensarten besondere Bedeutung erlangt, nämlich die Sol/Gel-Verfahren und die pulvertechnischen Verfahren.

Die Entwicklung von Sol/Gel-Verfahren zur Herstellung gesinterter Korund-Schleifmittel, wie sie z. B. 1984 von Cottringer unter anderem in der US 4.623.364 beschrieben wurden, hatte das Ziel, eine Erhöhung der Härte und Schleifleistung gegenüber bekannten erschmolzenen Schleifmitteln dadurch zu erreichen, daß die im wesentlichen dem Einkristall nahekommende innere Struktur letzterer durch ein polykristallines, möglichst gleichförmiges, porenfreies Gefüge mit Submikrometer-Charakter ersetzt wird (in der US 4.623.364 werden zum Beispiel Kristallite der Größe 0,2 - 0,4 µm beschrieben). Weitere Sol/Gel-Verfahren sind aus der DE 41 13 476 und der EP 0 263 810 bekannt.

Analoge Bemühungen, aus Korundpulver monolithische Al₂O₃-Sinterprodukte mit Gefügekorngrößen unter 2 µm und verbesserten mechanischen Eigenschaften herzustellen (wie zum Beispiel gemäß der JP 700 35 720 B), erfolgten im wesentlichen auf zwei Wegen, nämlich:
(a) Einsatz von möglichst feinkörnigem Submikrometer- bzw. Nanometer-Pulver,
(b) Zusatz von Substanzen zur Senkung der Dichtsintertemperatur.

Sehr feinkörnige Ausgangssubstanzen haben zwar die erwünschte hohe Sinteraktivität, bringen aber wegen ihres schlechten Verdichtungsverhaltens gleichzeitig erhebliche Probleme bei der Formgebung mit sich. Das für monolithische Teile bisher überwiegend angewandte kostengünstige uniaxiale Trockenpressen führt zu unzureichender Gründichte beziehungsweise zu Dichte-Inhomogenitäten im Formkörper und bei der Sinterung zu härte- und festigkeitsmindernden Defekten. Aus den genannten Gründen werden andere Formgebungsverfahren, wie kaltisostatisches Pressen, Strangziehen, Schlickerguß in porösen (saugfähigen) Formen, Druck- beziehungsweise Zentrifugalschlickerguß oder Gelcasting angewandt. Mittels Strangpressens von keramischen Massen aus Submikrometerpulvern und Sinterung bei 1400°C wurde eine Al₂O₃-Gefügekorngröße von 0,8 µm und eine Härte HV20 = 1920 erzielt (G. Riedel, et al., Silicates Industriels (1989) 1/2, 29-35); das verwendete Pulver hatte eine mittlere Korngröße von 0,45 µm.

Schlickerguß wird auch bei sehr feinkörnigen Al₂O₃-Pulvern mit d₅₀ < 0,4 µm eingesetzt (T.-Sh. Yeh et al., J. Am. Ceram. Soc. (1988), S. 841-844), und zwar auch in Kombination mit der Anwendung von Druck (Druckfiltration: F.F. Lange et al., Bull. Am. Ceram. Soc. (1987), S. 1498-1504;Vakuum-Druckfiltration: H. Mizuta et al., J. Am. Ceram. Soc. (1992), S. 469-473). Wie zum Beispiel von Mizuta u.a. gezeigt, können mittels dieser aufwendigen Verfahren die bisher besten mechanischen Kennwerte an reinem Sinterkorund erreicht werden, jedoch werden nach diesem Stand der Technik selbst mittels heißisostatischen Pressens (HIP) keine Vikkers-Kleinlasthärten ≥ 2000 oder Biegebruchfestigkeiten ≥ 800 MPa gemessen.

Die Möglichkeiten zur Verbesserung der mechanischen Eigenschaften und der Feinkörnigkeit von Al₂O₃-Sinterprodukten, die aus Korundpulver durch Zusatz von die Sinterung fördernden Substanzen hergestellt werden, sind sehr beschränkt. Die Dichtsintertemperatur von Al₂O₃-Submikrometerpulvern wird insbesondere durch Zusatz von mehr als 1 % von Dotierungsstoffen, die beim Sintern flüssige Phasen bilden, auf 1200°C und weniger reduziert, jedoch bleiben die Festigkeiten auf dem für traditionellen Sinterkorund üblichen Niveau von ca. 400 MPa (L.A. Xue et al., J. Am. Ceram. Soc., (1991), S. 2011-2013), und die dabei häufig entstehenden Korngrenzenphasen bringen ungünstige Hochtemperatureigenschaften mit sich, was gerade für den Einsatz als Werkzeugwerkstoff im allgemeinen oder als Schleifmittel im besonderen unerwünscht ist.

Der Nachteil solcher nach dem Stand der Technik bekannter Al₂O₃-Sinterprodukte, die aus Korundpulver hergestellt sind, besteht darin, daß keine hochgradig defektarmen Al₂O₃-Sinterprodukte mit hoher Härte und Festigkeit bekannt und herstellbar sind. Ohne daß bisher schlüssige Lösungen der Probleme bekannt geworden wären, wurden aktuelle Entwicklungen deshalb unter anderem auf zwei für erfolgversprechend gehaltene Richtungen konzentriert (T. J. Carbone, Seite 107 in: L.D. Hart (Herausgeber), "Alumina Chemicals Science and Technology Handbook", The Am. Ceram. Soc., Westerville, Ohio, 1990):
(1) Verbesserung der Sol/Gel-Technologien mit Keimzusätzen (z.B. G.L. Messing und M. Kumagai in Bull. Am. Ceram. Soc. 73 (1194) 88-91), sowie
(2) die Entwicklung der Verwendung von als ideal empfundenen Pulvern extrem einheitlicher Korngröße ("monosized", "uniform-sized") wie es von K. Yamada in "Alumina Chemicals Science and Technology Handbook" beschrieben wird (Herausgeber: L.D. Hart, The Am. Ceram. Soc., Westerville, Ohio, 1990 Seite 564).

Während der erstgenannte Weg das generelle Problem der Sol/Gel-Verfahren ungelöst läßt (dieses besteht darin, daß die zugesetzten Keime stets gröber als der Haupt -Rohstoff des Sols sind und extrem defektarme Gefüge daher kaum gebildet werden können), führt der zweite Lösungsansatz zu immer teureren Rohstoffen.

Durch spezielle Dispergiermaßnahmen und in Verbindung mit besonders defektarmen pulvertechnischen Formgebungsverfahren können allerdings monolithische Sinterkorund-Teile wie auch Schleifmittel erzeugt werden, deren Vickers-Härte (bei Prüflasten im Bereich von 10 - 100 N) den Wert HV = 2000 übersteigt, wenn die Gefügekorngröße nicht größer als 1,5 µm ist; die Biegebruchfestigkeit drucklos gesinterter Teile erreicht dabei 800 MPa und mehr. Hierzu sei auf die WO-95/28364A2 hingewiesen. Gemäß dieser Druckschrift wurde beim Schleifen der Querschnittsfläche eines Stahlrohres mit einer mit einem solchen Schleifmittel bestreuten Vulkanfiberschleifscheibe eine Abtragsleistung erzielt, die bei 182 % von der für Zirkonkorund gemessenen Leistung liegt. Allerdings wird dieser Fortschritt auch gemäß der WO-95/28364A2 nur bei Verwendung von Pulver-Rohstoffen mit begrenzter Korngrößenverteilung erreicht.

Alle beschriebenen pulvertechnischen Lösungsvorschläge weisen darüberhinaus den gemeinsamen Nachteil auf, daß sie Formgebungsverfahren zur Herstellung der zunächst noch ungesinterten Rohprodukte erfordern, die zur Herstellung sinterfähiger Schleifkornaggregate technisch wie kostenseitig wenig geeignet sind (zum Beispiel einachsiges Matrizenpressen, kaltisostatisches Pressen massiver, blockförmiger Teile, Gießen unter Anwendung von Druck [Druckfiltration] oder Zusatz spezieller Binder [Gelcasting]).

Aus der DE-A-195 03 854 ist zum Beispiel ein pulvertechnisches "Verfahren zur Herstellung gesinterter α-Al₂O₃-Körper sowie deren Verwendung" bekannt, das in seiner allgemeinsten Formulierung folgende Schritte umfasst:
- Vermahlen eines α-Al₂O₃-Pulvers mit einer mittleren Korngröße ≤ 3 µm zu einem Schlicker mit einer Partikelgröße < 1 µm,
- Trocknen des Schlickers auf eine Restfeuchte von ≤ 6 Gew.%,
- Verpressen des getrockneten Pulvers zu einem Grünkörper mit einer Dichte von ≥ 60% der theoretischen Dichte, und
- Schocksintern des Grünkörpers bei Temperaturen im Bereich von 1300 bis 1550°C.

Auch dieses bekannte Verfahren hat jedoch verschiedene Nachteile. Beispielhaft sei darauf hingewiesen, dass das Verpressen des getrockneten Pulvers zu einem Grünkörper der genannten Dichte einen Druck von etwa 2700 bar erfordert und somit einen sehr hohen apparativen Aufwand notwendig macht.

Die anschließende Schocksinterung muss bei 1300 bis 1550°C so schnell erfolgen, dass sie abgeschlossen ist, bevor das Kristallwachstum einsetzt, da ansonsten Unzulänglichkeiten des Endproduktes auftreten. Es liegt auf der Hand, dass der zur Sinterung verwendete Ofen eine hohe Leistungsfähigkeit aufweisen muss, damit der Grünkörper schlagartig, das heißt bevorzugt innerhalb von 10 bis 30 Sekunden auf die erforderliche Sintertemperatur gebracht werden kann. Außerdem ist für eine erfolgreiche Sinterung eine gute Vorverdichtung sowie eine homogene Kornverteilung und die Reinheit des Ausgangsstoffes von besonderer Bedeutung.

Um zu gewährleisten, dass das Endprodukt fehlerfrei ist und die gewünschten Eigenschaften aufweist, ist also insgesamt ein relativ hoher apparativer und verfahrenstechnischer Aufwand notwendig, der sich natürlich auch negativ auf die Kosten des Endprodukts auswirkt.

Anderseits bieten auch die im Rahmen der Sol/Gel-Verfahren genutzten Gießverfahren zur Erzeugung defektarmer ungesinterter Rohprodukte ausreichend hoher Gründichte keinen Ansatz zur Überwindung der oben Schwierigkeiten, weil die netzwerkbildenden Vorgänge beim Übergang des Sols in den Gelzustand an spezielle Eigenschaften der Sole gebunden sind, die Pulversuspensionen nicht aufweisen.

Der Erfindung liegt deshalb die Aufgabe zugrunde, ein Verfahren zu schaffen, mit dem ein hochwertiges Schleifmittel auf kostengünstige Weise hergestellt werden kann. Ferner sollen Schleifwerkzeuge mit im Vergleich zum Stand der Technik wesentlich besseren Schleifleistungen geschaffen werden.

Gelöst wird diese Aufgabe gemäß Anspruch 1 mit einem eingangs genannten Verfahren, das folgende Schritte aufweist:
-- Zubereiten eines Schlickers ohne Anwendung von polymerisierbaren und/oder koagulationsbildenden Zusätzen aus dem Pulver-Rohstoff;
-- Druckloses Flachgießen des Schlickers in einen Behälter;
-- Entgasen, Trocknen und Zerkleinern der gegossenen Schicht zu einem Vorprodukt; und
-- Sintern des Vorproduktes zu dem Schleifmittel.

Mit diesem Verfahren ist überraschenderweise ein Schleifmittel herstellbar, mit dem aufgrund seiner außerordentlichen Dichte und Defektarmut sehr hohe Schleifleistungen erzielbar sind.

Nach allgemeiner Überzeugung können nämlich dichte und defektarme keramische Produkte durch Sintern nur erzeugt werden, wenn der Sinterprozeß mit "grünen" Vorprodukten genügend hoher "Gründichte" (im allgemeinen > 50%) durchgeführt wird, die eine ausreichend hohe Packungshomogenität der Pulverteilchen aufweisen, um eine räumliche Heterogenisierung der Sinterschwindung und die damit verbundene Entstehung gröberer Poren und Defekte (Risse) zu vermeiden. Bekannte "flüssige" Formgebungsverfahren leisten dies nach bisheriger Kenntnis nur dann, wenn beim Gießen in poröse Formen (zum Beispiel aus Gips) Kapillarkräfte einen auf die flüssige Komponente des Schlickers wirkenden Druckgradienten erzeugen, oder wenn beim Gießen in poröse oder dichte Formen zusätzlicher Druck angewendet wird (Druckfiltration oder Zentrifugalgießen niedrigviskoser Schlicker, Heißgießen oder Spritzguß von Massen mit hohem Binderanteil) beziehungsweise wenn polymerisierbare oder koagulationsbildende Zusätze eingebracht werden (Gelcasting, DCC = Direct Coagulation Casting).

Da nicht zu erwarten war, daß bei einem Verzicht auf alle bisher für notwendig erachteten Maßnahmen "grüne" Vorprodukte genügend hoher "Gründichte" und Pakkungshomogenität gebildet werden können, wurde das erfindungsgemäße Flachgießen in ein Behältnis ohne offene Porosität - und zwar ohne Anwendung von Druck und ohne polymerisierbare oder koagulationsbildende Zusätze - zur Herstellung dichter und defektarmer keramischer Formkörper oder Schleifkorngranulate bisher nicht in Betracht gezogen. Um so überraschender ist die entgegen aller Erwartungen gefundene hohe Qualität der mit dem erfindungsgemäßen Verfahren herstellbaren Sinterprodukte.

Ein besonderer wirtschaftlicher Vorteil des erfindungsgemäßen Verfahrens resultiert aus der äußersten Einfachheit des Verfahrens und der Verwendbarkeit von Rohstoffen, die im Hinblick auf ihren Preis mit den zur Herstellung von Sol/Gel-Korunden verwendeten Ausgangsstoffen vergleichbar sind. Hinzu kommt als Vorteil gegenüber Sol/Gel-Verfahren der geringere Energie-Bedarf infolge der wesentlich höheren Feststoff-Gehalte der erfindungsgemäß eingesetzten Schlicker, so daß beim Trocknen weniger Wasser entfernt werden muß.

Ein ökologisch vorteilhafter Aspekt ist, daß das erfindungsgemäße Verfahren ohne den Zusatz organischer Bindemittel auskommt, die ansonsten in keramischen Prozessen meist unverzichtbar sind und außerdem thermisch wieder entfernt werden müssen und die Umgebungsluft belasten.

Überraschenderweise kann der wirtschaftliche Vorteil mit dem produktseitigen Vorteil einer hohen Qualität der so hergestellten Schleifmittel verbunden werden, deren Leistungsfähigkeit die Abtragsleistung bekannter Zirkonkorunde übersteigt. Die erfindungsgemäß hergestellten Schleifmittel erzielen beim Einsatz in Schleifkörpem (gebundene Schleifmittel) und in Schleifmitteln auf Unterlage eine Zerspanungsleistung, die die Leistung der nach dem Stand der Technik besten erschmolzenen Schleifinittel übertrifft.

Vorteilhafte Weiterbildungen der Erfindung sind in den abhängigen Ansprüchen angegeben.

Danach hat der Pulver-Rohstoff vorzugsweise eine mittlere Korngröße, die kleiner oder gleich etwa 0,8 µm ist.

Das drucklose Flachgießen erfolgt vorzugsweise in einen Behälter ohne offene Porosität.

Vor dem Zerkleinern der getrockneten Schicht wird vorzugsweise ein Vorbrennen bei einer im Vergleich zur Sintertemperatur reduzierten Temperatur durchgeführt.

Der Pulver-Rohstoff besteht ferner im wesentlichen aus Korund-Pulver (α-Al₂O₃).

Das Flachgießen erfolgt vorzugsweise mit einer Schichtdicke von etwa 2 bis 5 mm und kann zur Erzeugung vorgeprägter Trennstellen auch formgebend vorgenommen werden.

Die Entgasung kann durch verminderten Luftdruck oder durch Zusatz von die Viskosität oder die Oberflächenspannung vermindernden Substanzen unterstützt werden. Die Trocknung wird vorzugsweise bei etwa 60°C durchgeführt.

Das erfindungsgemäße Schleifmittel eignet sich - allein oder mit anderen Bestandteilen - zur Verwendung in allen bekannten Formen von Schleifwerkzeugen, so insbesondere in Schleifkörpern, Schleifmitteln auf Unterlage und Honwerkzeugen, sowie als Läpp-, Strahl- oder Poliermittel.

Weitere Einzelheiten, Merkmale und Vorteile der Erfindung ergeben sich aus der folgenden Beschreibung von bevorzugten Ausführungsbeispielen der Erfindung.

Das erfindungsgemäße Verfahren beinhaltet besonders bevorzugt folgende Schritte:
(1) Herstellung eines von polymerisierbaren oder koagulationsbildenden Zusätzen freien Schlickers auf wäßriger Basis, der außer dem eigentlichen Pulver-Rohstoff gegebenenfalls zusätzliche Dotierungskomponenten (Sinterhilfen) enthalten kann, und in dem die erforderliche Homogenität der Dispersion durch übliche Maßnahmen erzielt wird (z.B. Rührwerke, Ultraschall; Zusatz von Dispergierhilfsmitteln zur Verminderung der Schlickerviskosität beziehungsweise zur Erhöhung des Feststoffgehalts im Schlicker). Als Pulver wird vorzugsweise α-Al₂O₃ verwendet, es können jedoch auch Rohstoffe mit anderen stofflichen und / oder kristallographischen Eigenschaften eingesetzt werden.
   Die mittlere Partikelgröße des Pulver-Rohstoffes ist vorzugsweise ≤ 0,8 µm, da gegebenenfalls bei gröberen Pulvern die Adhäsionskräfte nicht mehr ausreichen können, um eine genügende Festigkeit der getrockneten Vorprodukte im noch ungesinterten Zustand zu gewährleisten.
(2) Nachdem nicht dispergierte, gröbere Pulver-Agglomerate mittels Sieb abgetrennt wurden (eine sinnvolle Größe liegt im Bereich um 30-50 µm), erfolgt als eine der Besonderheiten des Verfahrens das drucklose Vergießen einer ca. 2-5 mm dicken Schicht in ebenen Behältern ohne offene Porosität.
(3) Der Schlicker wird mehrere Stunden entgast und bei 60°C schonend getrocknet. Das Entgasen kann durch verminderten Luftdruck unterstützt werden (z. B. 200 mbar), es ist jedoch auch möglich, daß bei einem Zusatz von die Oberflächenspannung oder die Viskosität vermindernden Substanzen auf eine Evakuierung verzichtet werden kann. Die Trocknung des vergossenen und entgasten Schlickers ist auch bei Raumtemperatur möglich, erfordert dann jedoch längere Trockenzeiten.
   Die mit Feststoffgehalten des Schlickers zwischen 65 und 80 Massen-% erzielten Gründichten der getrockneten Schichten liegen im allgemeinen im Bereich zwischen 55 und 65 Massen-%.
(4) Während der Trocknung bilden sich in der gegossenen Schicht makroskopische Risse, die die folgende Zerkleinerung erleichtern. Angesichts der zum Beispiel in der WO-95/28364A2 beschriebenen technologischen Maßnahmen, die zur Erfüllung der hohen Anforderungen an die innere Perfektion (Defektarmut) fortgeschrittener pulvertechnisch erzeugter Schleifmittel als erforderlich bezeichnet werden, ist es außerordentlich überraschend, daß die entstehenden Bruchstücke, deren Struktur-Aufbau ja ohne Anwendung von Druck erfolgt ist und auch die Mitwirkung organischer oder sonstiger Binder nicht zur Voraussetzung hat, erstaunlicherweise nicht nur eine für niedrige Dichtsintertemperaturen ausreichend hohe Gründichte aufweisen, sondern offenbar auch durch eine hochgradige innere Defektarmut ausgezeichnet sind. Nur so sind die mit den erfindungsgemäßen Produkten erzielten hohen Schleifleistungen zu erklären.
   Damit diese Defektarmut auch noch nach der endgültigen Zerkleinerung der getrockneten Schicht auf Schleifkorngröße (zum Beispiel in einem Backenbrecher) vorhanden ist, kann der Zerkleinerung ein die Grünfestigkeit erhöhendes Vorbrennen bei im Vergleich zur Sintertemperatur niedriger Temperatur vorausgehen, durch das die Porosität um weniger als 10% vermindert werden kann. Diese Temperatur ist von dem Pulver-Rohstoff abhängig und liegt für Korund bei etwa 600 bis 800°C.
   Um den Zerkleinerungsprozeß durch vorgeprägte Trennstellen zu erleichtern, kann das Flachgießen der Schlickerdispersion auch formgebend erfolgen.
(5) Als letzter Schritt wird das derart erhaltene Vorprodukt als Schüttgut gesintert, und zwar unter den für die jeweiligen Ausgangsstoffe zweckmäßigen Bedingungen.

Die Erfindung soll nun in Verbindung mit mehreren Ausführungsbeispielen und den damit erzielbaren Schleifleistungen erläutert werden. Im Beispiel 1 ist eine im Hinblick auf die Eigenschaften besonders gute Ausführungsform für ein Produkt sehr hoher Schleifleistung angegeben, während Beispiel 2 eine in wirtschaftlicher Hinsicht besonders günstige Ausführungsform darstellt.

### Beispiel 1:

250 g einer hochreinen (99,99 % Al₂O₃) und besonders feindispersen α-Tonerde mit engem Korngrößenspektrum (d₁₆ = 0,13 µm, d₅₀ = 0,19 µm, d₈₄ = 0,25 µm, BET = 14 m²/g) wurden mittels eines Rührwerkes in 100 ml destilliertem Wasser bei pH = 4 unter Einwirkung eines Rührwerkes und von Ultraschall zwei Stunden lang dispergiert (Feststoffgehalt 71,4 %).

Die Dispersion wurde anschließend zu einer 3-5 mm dicken Schicht ausgegossen, fünf Stunden im Vakuumtrockenschrank bei 200 mbar entgast und bei 60°C getrocknet.

Nach einem zweistündigen Vorbrennen an Luft bei 600°C erfolgte die Zerkleinerung auf Schleifkorngröße in einem Backenbrecher und schließlich eine zweistündige Luftsinterung bei 1270°C.

Die Dichte wurde mittels Quecksilberporosimetrie bestimmt. Die Korngrößencharakterisierung erfolgte als Linienschnittanalyse an polierten und thermisch geätzten Flächen (Korngröße = 1,56 x mittlere Sehnenlänge). Die Prüflast zur Bestimmung der Vickers-Härte HVI betrug 9,81 N und wurde für 30 s aufrechterhalten. Die Bruchzähigkeitsmessung erfolgte mittels Eindrucktechnik (Rißlängenbestimmung an HV1-Eindrücken).

Folgende Eigenschaftswerte wurden ermittelt:

| | |
|---|---|
| Dichte | 3,93 g/cm³ (absolut) 98,6 % (relativ) |
| mittlere Gefügekorngröße | 0,9 µm |
| Härte HV1 | 2110 ± 60 |
| Bruchzähigkeit K_{IC} | 3,6 ± 0,2 MPa√m |

Ein analoger Versuch unter Zusatz von 0,1 Massen-% MgO, eingebracht in den Schlicker als Nitratlösung, zeigt zwar eine auf 0,7 µm verringerte mittlere Kristallitgröße und eine auf 3,96 g/cm³ (99,3 %) erhöhte Sinterdichte. Dies führt jedoch nicht zu einer weiteren Verbesserung der mechanischen Kennwerte.

### Beispiel 2:

300 g einer feindispersen α-Tonerde (d₁₆ = 0,2 µm d₅₀ = 0,3 µm, d₈₄ = 0,6 µm, BET = 9 m²/g) der Reinheit 99,8 % Al₂O₃ wurden unter Zusatz von Magnesiumnitratlösung (0,1 Massen-% MgO bezogen auf das gesinterte Endprodukt) als dotierungsbildender Zusatz mittels eines Rührwerkes in 105 ml destilliertem Wasser bei pH = 4 unter Einwirkung eines Rührwerkes und von Ultraschall 30 Minuten lang dispergiert und einer zusätzlichen zweistündigen Mahlung in einer schnellaufenden, vertikal orientierten Laborrührwerkskugelmühle unterzogen (der Feststoffgehalt der Suspension lag bei 74,1 %). Der Preis der hier eingesetzten Tonerde beträgt ca. 10 DM/kg.

Die Dispersion wurde anschließend zu einer 3-5 mm dicken Schicht ausgegossen, fünf Stunden im Vakuumtrockenschrank bei 200 mbar entgast und bei 60 °C getrocknet.

Nach einem zweistündigen Vorbrennen an Luft bei 800°C erfolgte die Zerkleinerung auf Schleifkorngröße in einem Backenbrecher und schließlich eine zweistündige Luftsinterung bei 1480°C.

Alle Messungen erfolgten wie in Beispiel 1 beschrieben. Folgende Eigenschaftswerte wurden ermittelt:

| | |
|---|---|
| Dichte | 3,94 g/cm³ (absolut) 98,8 % (relativ) |
| mittlere Gefügekorngröße | 1,3 µm |
| Härte HV1 | 1930 ± 40 |
| Bruchzähigkeit K_{IC} | 3,5 ± 0,4 MPa√m |

### Beispiel 3:

300 g einer hochreinen (99,99 % Al₂O₃) feindispersen α-Tonerde (d₁₆ = 0,20 µm, d₅₀ = 0,32 µm, d₈₄ = 0,60 µm, BET = 10,5 m²/g) wurden unter Zusatz von Magnesiumnitratlösung (0,1 Massen-% MgO bezogen auf das gesinterte Endprodukt) mittels eines Rührwerkes in 100 ml destilliertem Wasser auf dieselbe Weise dispergiert, wie in Beispiel 2 angegeben (Feststoffgehalt der Suspension 75,0 %).

Die Dispersion wurde anschließend zu einer 3-5 mm dicken Schicht ausgegossen, fünf Stunden im Vakuumtrockenschank bei 200 mbar entgast und bei 60°C getrocknet.

Nach einem zweistündigen Vorbrennen an Luft bei 800°C erfolgte die Zerkleinerung auf Schleifkorngröße in einem Backenbrecher und schließlich eine zweistündige Luftsinterung bei 1480°C.

Alle Messungen erfolgten in der Weise, wie es in Beispiel 1 beschrieben wurde. Folgende Eigenschaftswerte wurden ermittelt:

| | |
|---|---|
| Dichte | 3,96 g/cm³ (absolut) 99,2 % (relativ) |
| mittlere Gefügekorngröße | 1,5 µm |
| Härte HV1 | 1950 ± 40 |
| Bruchzähigkeit K_{IC} | 3,3 ± 0,3 MPa√m |

### Beispiel 4:

300 g Tonerde aus Beispiel 1 wurden in 100 ml destilliertem Wasser bei pH = 4 unter Einwirkung eines Rührwerkes und von Ultraschall 30 Minuten lang dispergiert und einer zusätzlichen zweistündigen Mahlung in einer Laborrührwerkskugelmühle wie in Beispiel 2 unterzogen; der Feststoffgehalt der Suspension betrug hierbei 73,7 Massen-%.

Das Vergießen der Suspension sowie das Entgasen, Trocknen, Vorbrennen und Zerkleinern erfolgte wie in Beispiel 1, wobei sich hier eine zweistündige Luftsinterung bei 1350°C anschloß.

Trotz der im Vergleich zu Beispiel 1 höheren Sintertemperatur wird ein feinkörniges Gefüge erhöhter Härte erzielt. Alle Messungen erfolgten in der Weise, wie es unter Beispiel 1 angegeben ist. Folgende Eigenschaftswerte wurden ermittelt:

| | |
|---|---|
| Dichte | 3,96 g/cm³ (absolut) 99,2 % (relativ) |
| mittlere Gefügekorngröße | 0,57 µm |
| Härte HV1 | 2159 ± 54 |
| Bruchzähigkeit K_{IC} | 3,1 ± 0,3 MPa√m |

### Beispiel 5:

Eine gesinterte Schleifkorn-Fraktion der Körnung P36 jeweils aus den Beispielen 1-4 wurde als Schleifmittel bei der Herstellung einer Vulkanfiberschleifscheibe mit einem Durchmesser von 180 mm verwendet und bezüglich ihrer Schleifleistung in folgendem Test mit zwei Schmelzkorundsorten verglichen:

Werkstück: Geschweißtes Stahl-Rohr aus zunderfreiem, kaltgewalztem Blech (St W 22 DIN 1543), Durchmesser 160 mm, Wandstärke 1 mm.

Schleifbedingungen: Drehzahl der Schleifscheibe: 6000 min⁻¹, Testrohr-Drehzahl 16,3 min⁻¹, entsprechend einer Umfangsgeschwindigkeit von 10 m/min, Anpreßkraft 30 N.

Prüfgröße: Stahlabschliff, gemessen in Gramm.

Eine hohe Schleifleistung ist durch einen hohen Werkstückabtrag gekennzeichnet. Nach jeweils 1, 2, 3 und 4 min wurde folgender Gesamt-Abtrag gemessen:

| Normalkorund: | | | |
|---|---|---|---|
| 41 g (1 min) | 64 g (2 min) | 83 g (3 min) | 99 g (4 min) |
| | | | |

| Eutektischer Zirkonkorund: | | | |
|---|---|---|---|
| 49 g (1 min) | 76 g (2 min) | 99 g (3 min) | 119 g (4 min) |
| | | | |

| Sinterkorund, erfindungsgemäß: | | | |
|---|---|---|---|
| Beispiel 1: | | | |
| 68 g (1 min) | 121 g (2 min) | 165 g (3 min) | 193 g (4 min) |
| | | | |

| Beispiel 2: | | | |
|---|---|---|---|
| 58 g (1 min) | 94 g (2 min) | 125 g (3 min) | 154 g (4 min) |
| | | | |

| Beispiel 3: | | | |
|---|---|---|---|
| 53 g (1 min) | 93 g (2 min) | 124 g (3 min) | 153 g (4 min) |
| | | | |

| Beispiel 4: | | | |
|---|---|---|---|
| 53 g (1 min) | 139 g (2 min) | 188 g (3 min) | 232 g (4 min) |

Die Ergebnisse offenbaren eine Leistungssteigerung durch das erfmdungsgemäße Schleifmittel auf 155 - 234 % gegenüber dem Normalkorund beziehungsweise auf 129 - 195 % gegenüber dem Zirkonkorundmaterial.

## Patentansprüche

1. Verfahren zur Herstellung eines polykristallinen, gesinterten, keramischen Schleifinittels aus einem Pulver-Rohstoff, **gekennzeichnet durch** folgende Verfahrensschritte:
-- Zubereiten eines Schlickers ohne Anwendung von polymerisierbaren und/oder koagulationsbildenden Zusätzen aus dem Pulver-Rohstoff;
-- Druckloses Flachgießen des Schlickers in einen Behälter;
-- Entgasen, Trocknen und Zerkleinern der gegossenen Schicht zu einem Vorprodukt; und
-- Sintern des Vorproduktes zu dem Schleifmittel.

2. Verfahren nach Anspruch 1,
**dadurch gekennzeichnet, daß** der Pulver-Rohstoff eine mittlere Korngröße von kleiner oder gleich etwa 0,8 µm aufweist.

3. Verfahren nach Anspruch 1 oder 2,
**dadurch gekennzeichnet, daß** zur Zubereitung des Schlickers aus dem Pulver-Rohstoff als Dispersionsmittel destilliertes oder deionisiertes Wasser verwendet wird.

4. Verfahren nach einem der vorhergehenden Ansprüche,
**dadurch gekennzeichnet, daß** das drucklose Flachgießen in einen Behälter ohne offene Porosität erfolgt.

5. Verfahren nach einem der vorhergehenden Ansprüche,
**dadurch gekennzeichnet, daß** vor dem Zerkleinern der getrockneten Schicht ein Vorbrennen bei einer im Vergleich zur Sintertemperatur reduzierten Temperatur erfolgt.

6. Verfahren nach einem der vorhergehenden Ansprüche,
**dadurch gekennzeichnet, daß** der Pulver-Rohstoff im wesentlichen aus Korund-Pulver (α-Al₂O₃) besteht.

7. Verfahren nach einem der vorhergehenden Ansprüche,
**dadurch gekennzeichnet, daß** der Feststoffgehalt der Dispersion zwischen etwa 65 und 80 Ma.-% liegt.

8. Verfahren nach einem der vorhergehenden Ansprüche,
**dadurch gekennzeichnet, daß** dem Pulver-Rohstoff zusätzliche Dotierungsmittel als Sinterhilfen zugesetzt werden.

9. Verfahren nach Anspruch 8,
**dadurch gekennzeichnet, daß** Magnesiumnitrat als dotierungsbildender Zusatz verwendet wird.

10. Verfahren nach einem der vorhergehenden Ansprüche,
**dadurch gekennzeichnet, daß** die Dispersion frei von organischen Bindemitteln ist.

11. Verfahren nach einem der vorhergehenden Ansprüche,
**dadurch gekennzeichnet, daß** die Viskosität beziehungsweise der Feststoffgehalt der Dispersion durch Zusatz von Dispergierhilfsmitteln eingestellt wird.

12. Verfahren nach einem der vorhergehenden Ansprüche,
**dadurch gekennzeichnet, daß** das Flachgießen mit einer Schichtdicke von etwa 2 bis 5 mm erfolgt.

13. Verfahren nach einem der vorhergehenden Ansprüche,
**dadurch gekennzeichnet, daß** das Flachgießen zur Erzeugung vorgeprägter Trennstellen formgebend erfolgt.

14. Verfahren nach einem der vorhergehenden Ansprüche,
**dadurch gekennzeichnet, daß** die Entgasung durch verminderten Luftdruck oder durch Zusatz von die Viskosität oder die Oberflächenspannung vermindernden Substanzen unterstützt wird.

15. Verfahren nach einem der vorhergehenden Ansprüche,
**dadurch gekennzeichnet, daß** die Trocknung bei etwa 60°C durchgeführt wird.

## Claims

1. Method for the manufacture of a polycrystalline, sintered, ceramic abrasive from a raw material powder, **characterized in** the steps of:
-- preparing a slip without the application of polymerizing and/or coagulating additives from the raw material powder;
-- pressureless shallow casting of the slip into a vessel;
-- degassing, drying and crushing of the cast sheet to obtain a fabricated material; and
-- sintering the fabricated material to obtain the abrasive.

2. Method according to claim 1,
**characterized in that** the raw material powder has an average grain size less than or equal to approximately 0,8 µm.

3. Method according to claim 1 or 2,
**characterized in that** distilled or deionized water is used as a dispersant for preparing the slip from the raw material powder.

4. Method according to one of the preceding claims,
**characterized in that** said pressureless shallow casting is performed into a vessel without open porosity.

5. Method according to one of the preceding claims,
**characterized in that** prior to crushing of the dryed sheet a prefiring at a temperature lower than the sintering temperature is performed.

6. Method according to one of the preceding claims,
**characterized in that** the raw material powder substantially consists of corundum powder (α-Al₂O₃).

7. Method according to one of the preceding claims,
**characterized in that** the solids content of the dispersion is between approximately 65 and 80 % per mass.

8. Method according to one of the preceding claims,
**characterized in that** additional doping agents are added to the raw material powder as sinter enhancer.

9. Method according to claim 8,
**characterized in that** magnesium nitrate is used as doping-effective additive.

10. Method according to one of the preceding claims,
**characterized in that** the dispersion is free of organic binders.

11. Method according to one of the preceding claims,
**characterized in that** the viscosity and the solids content, respectively, of the dispersion is adjusted by the addition of disperse enhancing agents.

12. Method according to one of the preceding claims,
**characterized in that** the shallow casting is performed with a thickness of the sheet of between approximately 2 and approximately 5 mm.

13. Method according to one of the preceding claims,
**characterized in that** for generating pre-embossed separation points the shallow casting is performed shaping.

14. Method according to one of the preceding claims,
**characterized in that** degassing is supported by decreased air pressure or by the addition of substances which decrease the viscosity or the surface tension.

15. Method according to one of the preceding claims,
**characterized in that** drying is conducted at a temperature of approximately 60°C.

## Revendications

1. Procédé de fabrication d'un produit abrasif céramique fritté polycristallin à partir d'un produit de départ en poudre, **caractérisé par** les étapes de procédé suivantes:
-- préparation d'une barbotine sans utiliser d'additifs polymérisables et/ou coagulants à partir d'un produit de départ en poudre;
-- coulage à plat sans pression de la barbotine dans un conteneur;
-- dégazage, séchage et broyage de la couche coulée en un pré-produit; et
-- frittage du pré-produit pour donner le produit abrasif.

2. Procédé selon la revendication 1,
**caractérisé en ce que** le produit de départ en poudre présente une granulométrie moyenne inférieure ou égale à 0,8 µm.

3. Procédé selon la revendication 1 ou 2,
**caractérisé en ce que**, pour préparer la barbotine à partir du produit de départ en poudre, on utilise de l'eau distillée ou désionisée en tant qu'agent dispersant.

4. Procédé selon l'une des revendications précédentes,
**caractérisé en ce que** la coulée à plat sans pression est réalisée dans un conteneur sans porosité ouverte.

5. Procédé selon l'une des revendications précédentes,
**caractérisé en ce que**, avant broyage de la couche séchée, on réalise une cuisson préalable à une température réduite par rapport à la température de frittage.

6. Procédé selon l'une des revendications précédentes,
**caractérisé en ce que** le produit de départ en poudre se compose essentiellement de poudre de corindon (α-Al₂O₃).

7. Procédé selon l'une des revendications précédentes,
**caractérisé en ce que** la teneur en solides de la dispersion est comprise entre environ 65 et 80 % en poids.

8. Procédé selon l'une des revendications précédentes,
**caractérisé en ce qu'**on ajoute au produit de départ en poudre des agents dopants supplémentaires en tant qu'agents d'aide au frittage.

9. Procédé selon la revendication 8,
**caractérisé en ce que** l'on utilise du nitrate de magnésium comme additif formant un dopant.

10. Procédé selon l'une des revendications précédentes,
**caractérisé en ce que** la dispersion est exempte de liants organiques.

11. Procédé selon l'une des revendications précédentes,
**caractérisé en ce que** la viscosité ou la teneur en solides de la dispersion est ajustée par l'ajout d'agents d'aide à la dispersion.

12. Procédé selon l'une des revendications précédentes,
**caractérisé en ce que** la coulée à plat se fait avec une épaisseur de couche d'environ 2 à 5 mm.

13. Procédé selon l'une des revendications précédentes,
**caractérisé en ce que** la coulée à plat est réalisée pour générer des points de rupture pré-estampés.

14. Procédé selon l'une des revendications précédentes,
**caractérisé en ce que** le dégazage est soutenu par pression d'air réduite ou par ajout de substances réduisant la viscosité ou la tension superficielle.

15. Procédé selon l'une des revendications précédentes,
**caractérisé en ce que** le séchage est réalisé à environ 60 °C.
